# EUROPEAN PATENT SPECIFICATION

(11) **EP 4 545 247 B1**
(45) Date of publication and mention of the grant of the patent: **01.07.2026**
(21) Application number: 23871636.9
(22) Date of filing: 28.08.2023
(51) Int. Cl.: B23Q 3/12, B23B 31/06, B23B 31/107, B23Q 3/00, B25J 15/04, B25J 19/00, B25B 5/02, B23Q 1/00

(54) **MEMBER REPLACEMENT DEVICE**
VORRICHTUNG ZUM ERSETZEN EINES ELEMENTS
DISPOSITIF DE REMPLACEMENT D'ÉLÉMENT

(30) Priority: 27.09.2022 JP 2022154147
(43) Date of publication of application: 30.04.2025
(73) Proprietor: Kosmek Ltd., Kobe-shi, Hyogo 651-2241 (JP)
(72) Inventor: HARUNA, Yosuke, Kobe-shi, Hyogo 651-2241 (JP)
(74) Representative: Dolleymores
(86) International application number: PCT/JP2023/031055
(87) International publication number: WO 2024/070395

(56) References cited:
- EP-A1- 3 263 294
- WO-A1-2022/004528
- JP-A- 2016 182 656
- JP-A- 2020 131 305
- JP-U- H0 428 989
- US-A- 5 015 003
- US-A1- 2017 144 230

## Description

### [Technical Field]

The present invention relates to a member replacement device that is suitable for detachably attaching a member such as a tool, a jig, a machining object, and a pallet to another member such as a robotic arm, a movable portion of a conveying machine, and a table as a fixing base.

### [Background Art]

The above-described member replacement device is similar to a so-called clamping device in terms of functionality, as it is used to detachably fix a member. Patent Literature 1 described below recites such a clamping device. The clamping device of the known art is structured as described below.

The clamping device is composed of members such as a cylindrical plug member protruding form a housing, an output rod, an engaging ball, and a piston. In the housing constituting the clamping device, a clamping chamber and an unclamping chamber are provided so that pressure fluid is supplied to and discharged from these chambers. The driving of the clamping device, i.e., the driving of the piston and the output rod is performed by using, for example, compressed air, and each time the driving is performed, compressed air is supplied to and discharged from the clamping chamber and the unclamping chamber.

### [Citation List]

### [Patent Literatures]

[Patent Literature 1] International Publication No. 2021/177385

### [Summary of Invention]

### [Technical Problem]

When a large number of clamping devices each of which is the above-described clamping device are provided, a large facility is required to supply compressed air. Furthermore, piping installations by which compressed air is supplied and discharged are large in number and complicated in structure. These points may not be favorable in terms of energy saving and environment protection. On this account, it is preferable that compressed air is unnecessary or minimum as a driving source.

An object of the present invention is to provide a member replacement device that does not require pressure fluid such as compressed air for operation, or requires only a small amount of pressure fluid even if the pressure fluid is necessary for operation.

### [Solution to Problem]

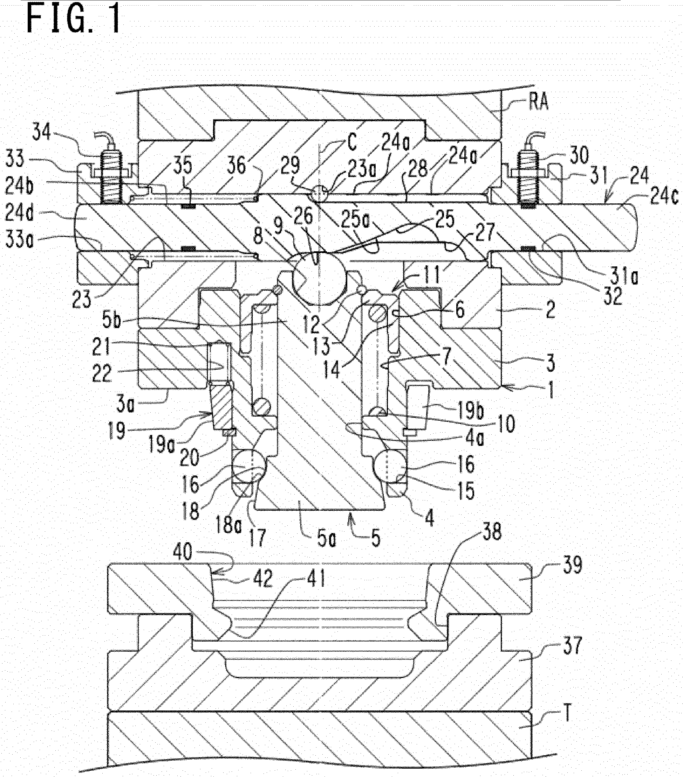

To achieve the object above, a member replacement device of the present invention is arranged as described below, as shown in FIG. 1 to FIG. 2, for example.
(1) A member replacement device of the subject application includes: a housing 1; a cylindrical plug member 4 which protrudes from the housing 1; an output rod 5 which is inserted into a plug member cylindrical hole 4a of the plug member 4 so as to be movable in an axial direction of the plug member cylindrical hole 4a; an engaging member 16 which is inserted into a through hole 15 formed in a circumferential wall of the plug member 4, the engaging member 16 being movable in the through hole 15 due to movement of the output rod 5 in the axial direction and being able to make contact with an engaging portion 41 of a fitting hole 40 formed in a clamping object T so that the plug member 4 becomes insertable; a cylindrical hole 6, 7 which is formed in the housing 1, the output rod 5 being inserted into the cylindrical hole 6, 7 to be movable in the axial direction; an operational member 9 which is rotatably accommodated in a recess 8 formed in a base-end-side end face of the output rod 5, the operational member 9 being configured to press and move the output rod 5 toward the leading end side in the axial direction; a biasing member 10 which is provided inside the cylindrical hole 6, 7 or with which the cylindrical hole 6, 7 is filled, the biasing member 10 being configured to press and move the output rod 5 toward the base end side in the axial direction; a guide hole 23 which is formed in a base end portion of the housing 1, the guide hole 23 extending in a direction intersecting with the axial direction; and a cam rod 24 which is movably inserted into the guide hole 23, a cam groove 25 into which the operational member 9 is fitted being formed in an outer circumferential surface of the cam rod 24. The cam groove 25 has a cam surface 25a in order to press the operational member 9 toward the leading end side. The biasing member 10 is, for example, a spring or compressed gas (pressurized gas).

In the member replacement device disclosed in the subject application, the following functions and effects are provided. The member replacement device does not have chambers such as a clamping chamber and an unclamping chamber of a known clamping device, to which and from which pressure fluid is supplied and discharged each time the device is driven. In the member replacement device, as the above-described built-in cam rod is moved manually or by an external force, the output rod is driven to move toward the leading end side in the axial direction through the operational member. In the opposite direction, i.e., toward the base end side in the axial direction, the output rod is driven to move by the above-described biasing member. The member replacement device therefore does not require pressure fluid such as compressed air for operation, or requires only a small amount of pressure fluid even if the pressure fluid is necessary for operation.

(2) The member replacement device of (1) may be arranged so that a release sensor 30 is provided at a side face of the housing 1 in order to detect whether the cam rod 24 is at a release position.

With this arrangement, it is possible to easily grasp that the member replacement device is in the released state.

(3) The clamping device of (1) or (2) may be arranged so that a lock sensor 34 is provided at a side face of the housing 1 in order to detect whether the cam rod 24 is at a locked position.

With this arrangement, it is possible to easily grasp that the member replacement device is in the locked state.

(4) The member replacement device of any one of (1) to (3) may be arranged so that, in the cam rod 24, a guide groove 28 extending in the axial direction of the cam rod 24 is formed in the outer peripheral surface on the opposite side to the cam groove 25, and a retaining hole 23a in which a rotation stopper rotational body 29 provided in the guide groove 28 is accommodated is provided at an intersection between (i) a virtual extension line C which extends from the operational member 9 toward the base end side and (ii) the guide hole 23.

According to this arrangement, the rotation stopper rotational body can receive a reaction force that the cam rod receives from the operational member while the operational member is pressed by the cam surface and is moving toward the leading end side. Furthermore, when the operational member has completed its movement toward the leading end side and the operational member is fitted in the cam groove, the above-described rotation stopper rotational body can receive the force that the cam rod receives from the operational member. As a result, it is possible to prevent the guide hole from being damaged due to sliding against the outer circumferential surface of the cam rod, and to maintain smooth movement of the cam rod for a long time.

(5) The member replacement device of any one of (1) to (4) may be arranged so that a concave surface 26, in which the operational member 9 having moved toward the leading end side is fitted, is formed in the outer circumferential surface of the cam rod 24 to be connected to the cam surface 25a.

According to this arrangement, the state of the operational member at the time of the completion of the movement of the operational member towards the leading end side is stably maintained.

(6) The member replacement device of any one of (1) to (5) may be arranged so that the biasing member 10 is a spring 10, a ring-shaped spring receiver 11, which receives one end of the spring 10, is provided on an outer circumferential surface of a base end portion of the output rod 5 so as to move toward the base end side together with the output rod 5, the spring receiver 11 has a receiving portion 13 that receives one end of the spring 10 and a cylindrical wall portion 14 that slides against the cylindrical hole 6, and the length of the cylindrical wall portion 14 is longer than the width in a radial direction of the receiving portion 13.

According to this arrangement, the output rod is supported by the spring receiver, and hence the movement of the output rod in the axial direction becomes stable.

(7) The member replacement device of any one of (1) to (6) may be arranged so that, in the cam rod 24, a rod escaping groove 27 into which the base end portion of the output rod 5 fits is formed to overlap the cam groove 25.

To ensure a sufficient moving distance in the axial direction of the output rod, it is necessary to arrange the cam groove to be sufficiently deep. In this case, there is concern that the base end portion of the output rod may collide with the cam rod. With the arrangement above, it is possible to prevent the output rod from colliding with the cam rod. In other words, the arrangement above makes it possible to sufficiently secure the moving distance in the axial direction of output rod.

(8) The member replacement device according to any one of (1) to 7 may be arranges so that the operational member 9 is a sphere.

This arrangement allows the output rod to smoothly move toward the leading end side.

### [Advantageous Effects of Invention]

The present invention makes it possible to provide a member replacement device that does not require pressure fluid such as compressed air for operation, or requires only a small amount of pressure fluid even if the pressure fluid is necessary for operation.

### [Brief Description of Drawings]

FIG. 1 relates to First Embodiment of the present invention and is a sectional side view of a member replacement device in a released state.
FIG. 2 is a sectional side view of the member replacement device shown in FIG. 1, which is in a locked state.

### [Description of Embodiments]

An embodiment of the present invention will be described based on an example of use of a member replacement device, in which the member replacement device is attached to a leading end portion of a robotic arm RA and a tool T that is a clamping object is detachably fixed to the robotic arm RA by the member replacement device. The member replacement device for this application is termed a tool changer.

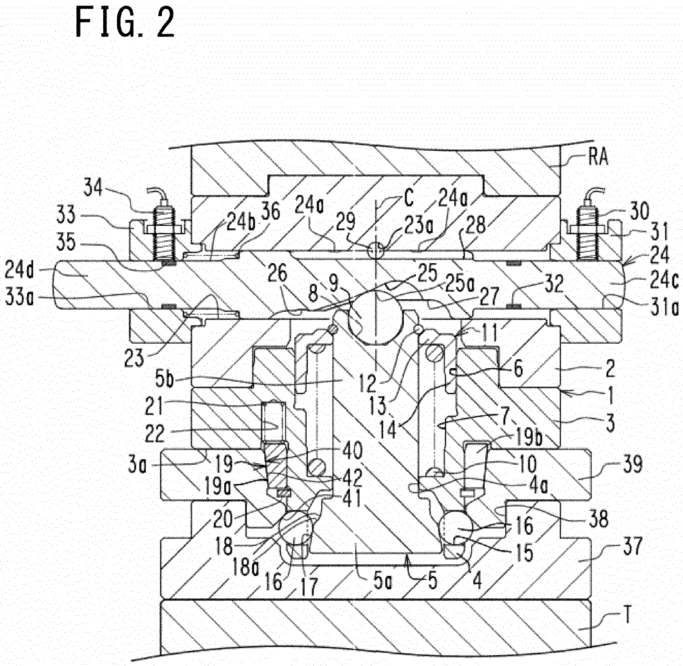

With reference to FIG. 1 and FIG. 2, the following will describe the structure of a member replacement device according to an embodiment of the present invention.

A housing 1 of the member replacement device is fixed to a leading end portion of a robotic arm RA. The housing 1 includes a first housing 2 on the base end side (robotic arm RA side) and a second housing 3 on the leading end side. The first housing 2 and the second housing 3 are fixed to each other by multiple bolts (not illustrated). The first housing 2 and the second housing 3 may be integrated as long as the assembly of the member replacement device is not obstructed.

From the second housing 3, a cylindrical plug member 4 which is integrated with the second housing 3 protrudes toward the leading end side. Into a plug member cylindrical hole 4a of the plug member 4, a rod leading end part 5a of an output rod 5 is inserted to be movable in an up-down direction (axial direction of the plug member cylindrical hole 4a). The axial direction of the output rod 5 is identical with the axial direction of the plug member cylindrical hole 4a.

A cylindrical hole 6 is formed on the base end side of the second housing 3, and a rod base end part 5b of the output rod 5 is inserted into the cylindrical hole 6 to be movable in the up-down direction. The cylindrical hole 6 is larger in diameter than the plug member cylindrical hole 4a. A medium-diameter cylindrical hole 7 is formed between the cylindrical hole 6 and the plug member cylindrical hole 4a. The cylindrical hole 6, the medium-diameter cylindrical hole 7, and the plug member cylindrical hole 4a have the same axial direction. The medium-diameter cylindrical hole 7 is smaller in diameter than the cylindrical hole 6 and larger in diameter than the plug member cylindrical hole 4a. The medium-diameter cylindrical hole 7 may be identical with the cylindrical hole 6 in diameter.

In a recess 8 formed in a base-end-side end face of the rod base end part 5b, a ball 9 (sphere, rotational body) as an operational member is accommodated to be rotatable. As the operational member, a rotational body such as a roller (not illustrated) may be used in place of the ball 9. The ball 9 is supported by the recess 8. In this connection, there may be a structure in which the ball 9 is supported by the first housing 2 or the second housing 3 while no recess 8 is formed in the base-end-side end face of the rod base end part 5b and the base-end-side end face is flat. This structure, however, is disadvantageous in that the member replacement device is long in the axial direction. As in the present embodiment, because the structure in which the recess 8 is formed in the base-end-side end face of the rod base end part 5b and the ball 9 is accommodated in the recess 8 is employed, the member replacement device is short in the axial direction and hence the member replacement device is small in size.

A spring 10 is provided inside the cylindrical hole 6 and the medium-diameter cylindrical hole 7 as a biasing member for biasing the output rod 5 upward (i.e., toward the base end side). The spring 10 is a compression coil spring. A ring-shaped spring receiver 11, which receives one end of the spring 10, is provided on the outer circumferential surface of the base end portion of the rod base end part 5b. The other end of the spring 10 is received by a stepped portion between the plug member cylindrical hole 4a and the medium-diameter cylindrical hole 7. Upward movement (i.e., movement toward the base end side) of the spring receiver 11 is restricted by a ring-shaped stopper 12 (retaining ring). Therefore, the spring receiver 11 moves upward (toward the base end side) together with the output rod 5. The spring receiver 11 has a receiving portion 13 that receives one end of the spring 10, and a cylindrical wall portion 14 that slides in the cylindrical hole 6. The length in the axial direction of the cylindrical wall portion 14 is longer than the width in the radial direction of the receiving portion 13. Because the cylindrical wall portion 14 is long in the axial direction, the sliding surface between the cylindrical wall portion 14 and the cylindrical hole 6 is large in area and hence the movement in the axial direction of the output rod 5 is stable.

As the biasing member for pressing the output rod 5 toward the base end side, a spring of another type such as a plate spring may be used in place of the compression coil spring. The output rod 5 and the spring receiver 11 may be integrated as long as the assembly of the member replacement device is not obstructed.

At a leading end portion of the circumferential wall of the plug member 4, through holes 15 are formed to be aligned in the circumferential direction at predetermined intervals. In each through hole 15, a ball 16 (engaging ball) is inserted as an engaging member. The through hole 15 supports each ball 16 to be movable between an inner position in the radial direction shown in FIG. 1 and an outer position in the radial direction shown in FIG. 2 (i.e., outside position).

In the outer circumferential wall of the rod leading end part 5a of the output rod 5, a pressing surface 17 and a retracting groove 18 are formed and vertically aligned, so as to correspond to each ball 16. The pressing surface 17 is arranged to increase the width toward the leading end side. As a result of movement to a position where the pressing surface 17 opposes the ball 16, the ball 16 is moved to the outside position so as to protrude outward in the radial direction as compared to the outer circumferential surface of the plug member 4. Furthermore, as a result of movement to a retracting position where the retracting groove 18 opposes the ball 16 and the ball 16 becomes insertable, the ball 16 becomes movable inward in the radial direction as compared to the outer circumferential surface of the plug member 4. While in the present embodiment each of the four balls 16 is inserted into each through hole 15, the number of the balls 16 is not limited to four.

Over a base end portion (base portion) of the circumferential wall of the plug member 4, an annular collet 19 is fitted. The collet 19 has a tapered outer circumferential surface 19a that is tapered off toward the leading end, and can be elastically decreased in diameter thanks to a single slit 19b extending in the up-down direction. The retaining ring 20 prevents the collet 19 from slipping out from the plug member 4 (i.e., restricts the movement toward the leading end side). In an upper surface 3a of the second housing 3, holes 22 are formed to be aligned in the circumferential direction at predetermined intervals. A spring 21 is inserted into each hole 22 as a biasing member for pushing the collet 19 toward the leading end side. The spring 21 is a compression coil spring. The collet 19 is biased toward the leading end side by the spring 21. On this account, even though the movement toward the leading end side is restricted by the retaining ring 20, the collet 19 is slightly movable in the up-down direction. While in the present embodiment each of the three springs 21 is inserted into each hole 22, the number of the springs 21 is not limited to three. As the biasing member for pressing the collet 19 toward the leading end side, a spring of another type such as a plate spring may be used in place of the compression coil spring.

A guide hole 23 is formed in the first housing 2 to extend in a direction intersecting with the axial direction of the output rod 5. In the present embodiment, the guide hole 23 extends in a direction orthogonal to the axial direction of the output rod 5. A cam rod 24 is inserted into the guide hole 23 so as to be movable.

A cam groove 25 is formed in the outer circumferential surface of the cam rod 24 in order to allow the ball 9 to be fitted therein. The cam groove 25 has a cam surface 25a for pressing the ball 9 toward the leading end side. The cam surface 25a is a surface that is inclined relative to the axial direction of the cam rod 24. Furthermore, a concave surface 26, in which the ball 9 having moved toward the leading end side is fitted, is formed to be connected to the cam surface 25a. Furthermore, a rod escaping groove 27 which is shallower than the cam groove 25 is formed in the outer circumferential surface of the cam rod 24 on the same side as the cam groove 25, so as to overlap the cam groove 25.

To ensure a sufficient moving distance in the axial direction of the output rod 5, it is necessary to arrange the cam groove 25 to be sufficiently deep. In this case, there is concern that the base end portion of the output rod 5 may collide with the outer circumferential surface of the cam rod 24. With the arrangement above, it is possible to prevent the output rod 5 from colliding with the cam rod 24, thanks to the rod escaping groove 27. In other words, the arrangement above makes it possible to sufficiently secure the moving distance in the axial direction of output rod 5.

In the cam rod 24, a guide groove 28 extending in the axial direction of the cam rod 24 is formed in the outer peripheral surface on the opposite side to the cam groove 25 and the rod escaping groove 27. A ball 29 is provided in the guide groove 28 as a rotation stopper rotational body. The ball 29 is rotatably accommodated in a retaining hole 23a formed in the guide hole 23. The retaining hole 23a is provided at the intersection between (i) a virtual extension line C which extends from a center part of the ball 9 (an axial central part of the output rod 5) toward the base end side in the axial direction of the output rod 5 and (ii) the guide hole 23.

According to the arrangement above, the ball 29 can receive a reaction force that the cam rod 24 receives from the ball 9 while the ball 9 is pressed by the cam surface 25a and is moving toward the leading end side. Furthermore, when the ball 9 has completed its movement toward the leading end side and the ball 9 is fitted in the cam groove 25, the above-described ball 29 can receive the force that the cam rod 24 receives from the ball 9. As a result, it is possible to prevent the guide hole 23 from being damaged due to sliding against the outer circumferential surface of the cam rod 24, and to maintain smooth movement of the cam rod 24 for a long time. The above-described reaction force is basically received by the inner circumferential surface of the guide hole 23, which comes into contact with the outer circumferential surface of the cam rod 24 (the outer circumferential surface of a large diameter portion) located to the left of the guide groove 28 in the figure and the inner circumferential surface of the guide hole 23 that comes into contact with a part of the outer circumferential surface of the cam rod 24 in the guide groove 28, where the guide groove 28 is not formed.

In order to achieve smoother movement of the cam rod 24, grooves 24a extending in the circumferential direction are formed in the outer circumferential surface of the cam rod 24. The number of the grooves 24a is two or more. By forming an oil pool in each groove 24a, it is possible to reduce a friction force acting between the cam rod 24 and the guide hole 23, and hence the movement of the cam rod 24 becomes smooth. The cam rod 24 has a small diameter portion 24b, and a spring 36 is attached to the outer circumference of the small diameter portion 24b. The biasing force of the spring 36 is significantly smaller than the biasing force of the spring 10. The cam rod 24 to which the ball 9 is pressed is not moved solely by the biasing force of the spring 36.

A release sensor 30 is provided at a side face of the first housing 2 in order to detect whether the cam rod 24 is at a release position shown in FIG. 1. On a side face of the first housing 2, a sensor mounting member 31 is fixed. To a side face of this sensor mounting member 31, the release sensor 30 is attached. The sensor mounting member 31 has a cylindrical hole 31a, and the cam rod 24 is movably inserted into the cylindrical hole 31a. The release sensor 30 is a magnetic sensor. A ring-shaped magnet 32 is attached to the outer circumferential surface of the cam rod 24 to detect whether the cam rod 24 is at the release position. As the release sensor 30 detects the magnet 32, it is possible to detect that the cam rod 24 is at the release position.

To a side face of the first housing 2 on the opposite side to the sensor mounting member 31, another sensor mounting member 33 is fixed. To a side face of this sensor mounting member 33, a lock sensor 34 is attached. The sensor mounting member 33 has a cylindrical hole 33a, and the cam rod 24 is movably inserted into the cylindrical hole 33a. The lock sensor 34 is a magnetic sensor. A ring-shaped magnet 35 is attached to the outer circumferential surface of the cam rod 24 to detect whether the cam rod 24 is at the locked position. As the lock sensor 34 detects the magnet 35, it is possible to detect that the cam rod 24 is at the locked position.

Because of the presence of the release sensor 30, it is possible to easily grasp that the member replacement device is in the released state. Furthermore, because of the presence of the lock sensor 34, it is possible to easily grasp that the member replacement device is in the locked state. The release sensor 30 and the lock sensor 34 are not limited to magnetic sensors.

A tool adapter 37 is fixed to the base end of the tool T. A recess 38 is formed in the tool adapter 37. A ring member 39 is attached to the recess 38, and the ring member 39 is fixed to the tool adapter 37 by bolts (not illustrated). The inner circumferential surface of the ring member 39 forms a fitting hole 40, and a plug member 4 is insertable into the fitting hole 40. The fitting hole 40 corresponds to a fitting hole formed in the tool T which is an clamping object.

In the fitting hole 40 of the ring member 39, an engaging portion 41 is formed to be tapered to increase in width toward the bottom of the recess 38. At a part close to the opening side as compared to the engaging portion 41, a tapered inner circumferential surface 42 is formed to be engaged with a tapered outer circumferential surface 19a of the collet 19. The tapered inner circumferential surface 42 is formed to decrease in width toward the bottom of the recess 38.

While in the present embodiment the fitting hole 40 is formed in the ring member 39, the fitting hole 40 may be formed by the inner circumference of the recess 38 of the tool adapter 37. In other words, the engaging portion 41 and the tapered inner circumferential surface 42 described above may be formed directly in the inner circumference of the recess 38 of the tool adapter 37. Furthermore, the fitting hole 40 having the engaging portion 41 and the tapered inner circumferential surface 42 described above may be formed in the tool T.

When the fitting hole 40 is formed in the tool T, the fitting hole 40 may be formed in the tool T itself, the fitting hole 40 may be formed in the tool adapter 37, or the fitting hole 40 may be formed in the ring member 39 as in the present embodiment. In other words, the phrase "the fitting hole 40 is formed in the tool T" encompasses not only a case where the fitting hole 40 is formed in the tool T itself but also a case where the fitting hole 40 is formed in a member that is directly fixed to the tool T (e.g., the tool adapter 37) or a member that is indirectly fixed to the tool T (e.g., the ring member 39).

The above-described member replacement device operates as follows.

In the released state shown in FIG. 1, the ball 9 is fitted in the concave surface 26 formed in the cam rod 24 and is pressed into the cylindrical hole 6 of the second housing 3 as compared to the locked state shown in FIG. 2. Due to this, a state in which the ball 9 presses and lowers the output rod 5 toward the leading end side against the biasing force of the spring 10 has been established. As the output rod 5 descends, the ball 16 of the plug member 4 is movable to the retracting position inside the retracting groove 18. The robotic arm RA is operated so that the leading end portion of the robotic arm RA to which the member replacement device having members such as the output rod 5 is attached is positioned above the ring member 39 that is fixed to the tool T through the tool adapter 37.

When the tool T is attached to the robotic arm RA, to begin with, the leading end portion of the robotic arm RA is lowered and the plug member 4 is inserted into the fitting hole 40 of the ring member 39. At this stage, the tapered inner circumferential surface 42 of the fitting hole 40 makes contact with the tapered outer circumferential surface 19a of the collet 19 in an enlarged diameter state, and a slight gap is formed between the upper surface 3a (seating surface) of the second housing 3 and the ring member 39. Thereafter, an end portion 24c of the cam rod 24 protruding from the sensor mounting member 31 is brought into contact with a stationary object (not illustrated) by, for example, moving the leading end portion of the robotic arm RA in the horizontal direction, so that the leading end portion 24c of the cam rod 24 is pressed into the guide hole 23 on account of a reaction force from the object. When the end portion 24c of the cam rod 24 is pressed into the guide hole 23, the ball 9 comes off from the concave surface 26 formed in the cam rod 24. The ball 9 is then pressed by the biasing force of the spring 10, and moves along the cam surface 25a and enters the cam groove 25. Furthermore, as the spring 10 presses and moves the output rod 5 toward the base end side through the spring receiver 11, the output rod 5 ascends. As the output rod 5 ascends, a pressing portion 18a constituting part of the retracting groove 18 formed in the output rod 5 presses the ball 16 of the plug member 4 to a protruding position on the outer side in the radial direction. Subsequently, the pressing surface 17 of the output rod 5 presses the engaging portion 41 of the tool T (ring member 39) upward through the ball 16. As a result, the collet 19 decreases in diameter and slightly ascends together with the tool T. Consequently, the ring member 39 is received by the upper surface 3a of the second housing 3, and the tool T is firmly fixed to the leading end portion of the robotic arm RA through the member replacement device. The member replacement device is switched from the released state shown in FIG. 1 to the locked state shown in FIG. 2.

When the member replacement device is switched from the locked state shown in FIG. 2 to the released state shown in FIG. 1, the robotic arm Ra is operated so that an end portion 24d of the cam rod 24 protruding from the sensor mounting member 33 is brought into contact with a stationary object (not illustrated) and the leading end portion 24d of the cam rod 24 is pressed into the guide hole 23 on account of a reaction force from the object. When the end portion 24d of the cam rod 24 is pressed into the guide hole 23, the cam surface 25a formed on the cam rod 24 presses the ball 9, and the ball 9 moves along the cam surface 25a and climbs on the concave surface 26. Due to this, the ball 9 presses the output rod 5 toward the leading end side against the biasing force of the spring 10, with the result that the output rod 5 descends. As the output rod 5 descends, the retracting groove 18 formed in the output rod 5 is positioned to oppose the ball 16 of the plug member 4, and the ball 16 becomes movable into the retracting groove 18 (i.e., inward in the radial direction of the output rod 5). As a result, as shown in FIG. 1, it becomes possible to smoothly detach the tool T (ring member 39) from the robotic arm RA.

The friction force between the ball 9 and the cam surface 25a is reduced by the rotation of the ball 9. As a result, the force of pressing the cylindrical wall portion 14 of the spring receiver 11 onto the inner circumferential surface of the cylindrical hole 6 by the ball 9 through the output rod 5 is reduced, and hence partial sliding wear or damage of the outer circumferential surface of the cylindrical wall portion 14 and the inner circumferential surface of the cylindrical hole 6 is reduced. Furthermore, partial wear or damage occurring between the inner circumferential surface of the plug member cylindrical hole 4a of the plug member 4 and the outer circumferential surface of the output rod 5 is also reduced. On this account, it is possible to smoothly move the output rod 5 toward the leading end side.

The member replacement device of the present embodiment does not have chambers such as the clamping chamber and the unclamping chamber of the known clamping device, to which and from which pressure fluid is supplied and discharged each time the device is driven. In this member replacement device, as the ball 9 is moved by an external force through the built-in cam rod 24, the output rod 5 is pressed by the ball 9 and moved toward the leading end side. Toward the base end side that is opposite to the leading end side, the output rod 5 is driven to move by the spring 10. The member replacement device can therefore be driven without requiring compressed fluid such as compressed air. Instead of moving the cam rod 24 by hitting it onto an object, the cam rod 24 may be moved by being pushed by a human hand.

In the member replacement device described above, the spring 10 is provided inside the cylindrical hole 6 and the medium-diameter cylindrical hole 7, and the spring 10 is arranged to press and move the output rod 5 toward the base end side. Alternatively, the space inside the cylindrical hole 6 and the medium-diameter cylindrical hole 7 may be arranged to function as a pressurized gas chamber, and the output rod 5 may be pressed and moved toward the base end side by the gas pressure of the pressurized gas chamber. The pressurized gas chamber refers to a chamber filled with pressurized gas. The pressurized gas chamber is sealed against the outside to prevent the pressurized gas from leaking out. The pressurized gas with which the pressurized gas chamber is filled is the biasing member configured to press and move the output rod 5 toward the base end side, in place of the spring 10. Examples of the pressurized gas include compressed air and compressed nitrogen gas.

The pressurized gas chamber is sealed to prevent the pressurized gas from leaking to the outside, as described above. However, when the output rod 5 is driven by the filled pressure gas, a small amount of pressurized gas may leak out from the pressurized gas chamber. On this account, in order to maintain the gas pressure in the pressurized gas chamber to be sufficient for driving the output rod 5, the member replacement device is preferably arranged so that an amount of the compressed air equal to the amount leaking out from the pressurized gas chamber is supplied to the pressurized gas chamber.

According to this arrangement, to the pressurized gas chamber, pressurized gas is supplied only by the amount leaking out from the pressurized gas chamber. On this account, the use amount of the compressed air is extremely small. Therefore, while a facility for supplying the pressurized gas such as an air compressor is still required, the facility may be very small in size.

The present invention is not limited to the embodiment above, and elements of the embodiment above can be combined as appropriate or various changes can be made to the embodiment, as long as not departing from the scope of the appended claims

For example, the above-described embodiment is changeable as follows.

The posture of the member replacement device may be different from the vertical posture described above, and may be turned upside down, may be lateral, or may be inclined.

The member replacement device may be fixed to a movable portion of the conveying machine, or to a table as a fixing base. The clamping object may be, for example, a jig, a machining object, or a pallet.

Both the release sensor 30 and the lock sensor 34 or either the release sensor 30 or the lock sensor 34 may be omitted.

### [Reference Signs List]

1: housing, 4: plug member, 4a: plug member cylindrical hole, 5: output rod, 6: cylindrical hole, 7: medium-diameter cylindrical hole (cylindrical hole), 8: recess, 9: ball (operational member), 10: spring (biasing member), 11: spring receiver, 13: receiving portion, 14: cylindrical wall portion, 15: through hole, 16: ball (engaging member), 23: guide hole, 23a: retaining hole, 24: cam rod, 25: cam groove, 25a: cam surface, 26: concave surface, 27: rod escaping groove, 28: guide groove, 29: ball (rotation stopper rotational body), 30: release sensor, 34: lock sensor, 40: fitting hole, 41: engaging portion, C: extension line, T: tool (clamping object)

## Claims

1. A member replacement device comprising:
a housing (1);
a cylindrical plug member (4) which protrudes from the housing (1);
an output rod (5) which is inserted into a plug member cylindrical hole (4a) of the plug member (4) so as to be movable in an axial direction of the plug member cylindrical hole (4a);
an engaging member (16) which is inserted into a through hole (15) formed in a circumferential wall of the plug member (4), the engaging member (16) being movable in the through hole (15) due to movement of the output rod (5) in the axial direction and being able to make contact with an engaging portion (41) of a fitting hole (40) formed in a clamping object (T) so that the plug member (4) becomes insertable;
a cylindrical hole (6, 7) which is formed in the housing (1), the output rod (5) being inserted into the cylindrical hole (6, 7) to be movable in the axial direction;
an operational member (9) which is rotatably accommodated in a recess (8) formed in a base-end-side end face of the output rod (5), the operational member (9) being configured to press and move the output rod (5) toward the leading end side in the axial direction;
a biasing member (10) which is provided inside the cylindrical hole (6, 7) or with which the cylindrical hole (6, 7) is filled, the biasing member (10) being configured to press and move the output rod (5) toward the base end side in the axial direction;
a guide hole (23) which is formed in a base end portion of the housing (1), the guide hole (23) extending in a direction intersecting with the axial direction; and
a cam rod (24) which is movably inserted into the guide hole (23), a cam groove (25) into which the operational member (9) is fitted being formed in an outer circumferential surface of the cam rod (24),
the cam groove (25) having a cam surface (25a) in order to press the operational member (9) toward the leading end side.

2. The member replacement device according to claim 1, wherein, a release sensor (30) is provided at a side face of the housing (1) in order to detect whether the cam rod (24) is at a release position.

3. The member replacement device according to claim 1 or 2, wherein,
a lock sensor (34) is provided at a side face of the housing (1) in order to detect whether the cam rod (24) is at a locked position.

4. The member replacement device according to any one of claims 1 to 3, wherein,
in the cam rod (24), a guide groove (28) extending in the axial direction of the cam rod (24) is formed in the outer peripheral surface on the opposite side to the cam groove (25), and
a retaining hole (23a) in which a rotation stopper rotational body (29) provided in the guide groove (28) is accommodated is provided at an intersection between (i) a virtual extension line (C) which extends from the operational member (9) toward the base end side and (ii) the guide hole (23).

5. The member replacement device according to any one of claims 1 to 4, wherein,
a concave surface (26), in which the operational member (9) having moved toward the leading end side is fitted, is formed in the outer circumferential surface of the cam rod (24) to be connected to the cam surface (25a).

6. The member replacement device according to any one of claims 1 to 5, wherein,
the biasing member (10) is a spring (10),
a ring-shaped spring receiver (11), which receives one end of the spring (10), is provided on an outer circumferential surface of a base end portion of the output rod (5) so as to move toward the base end side together with the output rod (5),
the spring receiver (11) has a receiving portion (13) that receives one end of the spring (10) and a cylindrical wall portion (14) that slides against the cylindrical hole (6),
and
the length of the cylindrical wall portion (14) is longer than the width in a radial direction of the receiving portion (13).

7. The member replacement device according to any one of claims 1 to 6, wherein,
in the cam rod (24), a rod escaping groove (27) into which the base end portion of the output rod (5) fits is formed to overlap the cam groove (25).

8. The member replacement device according to any one of claims 1 to 7, wherein,
the operational member (9) is a sphere.

## Patentansprüche

1. Elementaustauschvorrichtung, die umfasst:
ein Gehäuse (1);
ein zylindrisches Steckelement (4), das aus dem Gehäuse (1) herausragt;
eine Ausgangsstange (5), die in eine zylindrische Bohrung (4a) des Steckelements des Steckelements (4) eingeführt ist, um in einer axialen Richtung der zylindrischen Bohrung (4a) des Steckelements beweglich zu sein;
ein Eingriffselement (16), das in eine Durchgangsbohrung (15) eingeführt ist, die in einer Umfangswand des Steckelements (4) ausgebildet ist, wobei das Eingriffselement (16) aufgrund der Bewegung der Ausgangsstange (5) in der axialen Richtung in der Durchgangsbohrung (15) beweglich ist und mit einem Eingriffsabschnitt (41) einer in einem Klemmobjekt (T) ausgebildeten Passbohrung (40) in Kontakt treten kann, sodass das Steckelement (4) einführbar wird;
eine zylindrische Bohrung (6, 7), die in dem Gehäuse (1) ausgebildet ist, wobei die Ausgangsstange (5) in die zylindrische Bohrung (6, 7) eingeführt ist, um in der axialen Richtung beweglich zu sein;
ein Betriebselement (9), das drehbar in einer Aussparung (8) aufgenommen ist, die in einer basisendseitigen Endfläche der Ausgangsstange (5) ausgebildet ist, wobei das Betriebselement (9) dazu konfiguriert ist, die Ausgangsstange (5) in der axialen Richtung zu der vorderen Endseite hin zu drücken und zu bewegen;
ein Vorspannelement (10), das innerhalb der zylindrischen Bohrung (6, 7) bereitgestellt ist oder mit dem die zylindrische Bohrung (6, 7) ausgefüllt ist, wobei das Vorspannelement (10) dazu konfiguriert ist, die Ausgangsstange (5) in der axialen Richtung zu der Basisendseite hin zu drücken und zu bewegen;
eine Führungsbohrung (23), die in einem Basisendabschnitt des Gehäuses (1) ausgebildet ist, wobei sich die Führungsbohrung (23) in einer Richtung erstreckt, die die axiale Richtung schneidet; und
eine Nockenstange (24), die beweglich in die Führungsbohrung (23) eingesetzt ist, wobei eine Nockennut (25), in die das Betriebselement (9) eingepasst wird, in einer Außenumfangsoberfläche der Nockenstange (24) ausgebildet ist,
wobei die Nockennut (25) eine Nockenoberfläche (25a) aufweist, um das Betriebselement (9) zu der vorderen Endseite hin zu drücken.

2. Elementaustauschvorrichtung nach Anspruch 1, wobei an einer Seitenfläche des Gehäuses (1) ein Freigabesensor (30) bereitgestellt ist, um zu erkennen, ob sich die Nockenstange (24) in einer Freigabeposition befindet.

3. Elementaustauschvorrichtung nach Anspruch 1 oder 2, wobei
ein Verriegelungssensor (34) an einer Seitenfläche des Gehäuses (1) bereitgestellt ist, um zu erkennen, ob sich die Nockenstange (24) in einer Verriegelungsposition befindet.

4. Elementaustauschvorrichtung nach einem der Ansprüche 1 bis 3, wobei
in der Nockenstange (24) eine Führungsnut (28), die sich in der axialen Richtung der Nockenstange (24) erstreckt, in der Außenumfangsoberfläche auf der der Nockennut (25) gegenüberliegenden Seite ausgebildet ist, und
eine Haltebohrung (23a), in der ein in der Führungsnut (28) bereitgestellter Drehanschlagdrehkörper (29) aufgenommen wird, an einem Schnittpunkt zwischen (i) einer virtuellen Verlängerungslinie (C), die sich von dem Betriebselement (9) zu der Basisendseite hin erstreckt, und (ii) der Führungsbohrung (23) bereitgestellt ist.

5. Elementaustauschvorrichtung nach einem der Ansprüche 1 bis 4, wobei
eine konkave Oberfläche (26), in die das Betriebselement (9), das sich zu der vorderen Endseite hin bewegt hat, eingepasst ist, in der Außenumfangsoberfläche der Nockenstange (24) ausgebildet ist, die mit der Nockenoberfläche (25a) verbunden werden soll.

6. Elementaustauschvorrichtung nach einem der Ansprüche 1 bis 5, wobei
das Vorspannelement (10) eine Feder (10) ist,
ein ringförmiger Federaufnehmer (11), der ein Ende der Feder (10) aufnimmt, auf einer Außenumfangsoberfläche eines Basisendabschnitts der Ausgangsstange (5) bereitgestellt ist, um sich zusammen mit der Ausgangsstange (5) zu der Basisendseite hin zu bewegen,
der Federaufnehmer (11) einen Aufnahmeabschnitt (13), der ein Ende der Feder (10) aufnimmt, und einen zylindrischen Wandabschnitt (14) aufweist, der an der zylindrischen Bohrung (6) entlanggleitet, und
die Länge des zylindrischen Wandabschnitts (14) größer ist als die Breite in einer radialen Richtung des Aufnahmeabschnitts (13).

7. Elementaustauschvorrichtung nach einem der Ansprüche 1 bis 6, wobei
in der Nockenstange (24) eine Stangenausfahrnut (27), in die der Basisendabschnitt der Ausgangsstange (5) passt, ausgebildet ist, um die Nockennut (25) zu überlappen.

8. Elementaustauschvorrichtung nach einem der Ansprüche 1 bis 7, wobei
das Betriebselement (9) eine Kugel ist.

## Revendications

1. Dispositif de remplacement d'élément, comprenant :
un boîtier (1) ;
un élément obturateur cylindrique (4) dépassant du boîtier (1) ;
une tige de sortie (5) insérée dans un orifice cylindrique d'élément obturateur (4a) de l'élément obturateur (4) de façon à pouvoir être déplacée dans une direction axiale de l'orifice cylindrique de l'élément obturateur (4a) ;
un élément d'engagement (16) inséré dans un trou traversant (15) réalisé dans une paroi circonférentielle de l'élément obturateur (4), l'élément d'engagement (16) pouvant être déplacé dans le trou traversant (15) grâce au déplacement de la tige de sortie (5) dans le sens axial, et pouvant se placer au contact d'une partie d'engagement (41) d'un trou d'assemblage (40) réalisé dans un objet de fixation (T) de sorte que l'élément obturateur (4) devienne insérable ;
un orifice cylindrique (6, 7) réalisé dans le boîtier (1), la tige de sortie (5) étant insérée dans l'orifice cylindrique (6, 7) afin de pouvoir être déplacée dans le sens axial ;
un élément opérationnel (9) logé en rotation dans un évidement (8) formé dans une face terminale du côté d'extrémité de base de la tige de sortie (5), l'élément opérationnel (9) étant configuré pour appuyer sur la tige de sortie (5) et la déplacer vers le côté d'extrémité antérieure dans le sens axial ;
un élément de sollicitation (10) agencé à l'intérieur de l'orifice cylindrique (6, 7) ou avec lequel l'orifice cylindrique (6, 7) est rempli, l'élément de sollicitation (10) étant configuré pour appuyer sur la tige de sortie (5) et la déplacer vers le côté d'extrémité de base dans le sens axial ;
un orifice de guidage (23) pratiqué dans une partie d'extrémité de base du boîtier (1), l'orifice de guidage (23) s'étendant dans une direction croisant le sens axial ; et
une barre à came (24) insérée de façon mobile dans l'orifice de guidage (23), une rainure de came (25) dans laquelle l'élément opérationnel (9) est monté étant formée dans une surface circonférentielle extérieure de la barre à came (24),
la rainure de came (25) possédant une surface de came (25a) de façon à presser l'élément opérationnel (9) vers le côté d'extrémité antérieure.

2. Dispositif de remplacement d'élément selon la revendication 1, un capteur de déclenchement (30) étant pratiqué sur une face latérale du boîtier (1) afin de détecter si la barre à came (24) se trouve dans une position de déclenchement.

3. Dispositif de remplacement d'élément selon la revendication 1 ou 2,
un capteur de verrouillage (34) étant pratiqué sur une face latérale du boîtier (1) afin de détecter si la barre à came (24) se trouve dans une position verrouillée.

4. Dispositif de remplacement d'élément selon une quelconque des revendications 1 à 3, dans lequel,
dans la barre à came (24), une rainure de guidage (28) s'étendant dans le sens axial de la barre à came (24), est pratiquée dans la surface périphérique extérieure sur le côté opposé à la rainure de came (25), et
un orifice de maintien (23a), dans lequel un corps rotatif d'arrêt de rotation (29) pratiqué dans la rainure de guidage (28) est logé, est agencé à une intersection entre (i) une ligne d'extension virtuelle (C), s'étendant de l'élément opérationnel (9) vers le côté d'extrémité de base et (ii) l'orifice de guidage (23).

5. Dispositif de remplacement d'élément selon une quelconque des revendications 1 à 4, dans lequel,
une surface concave (26), dans laquelle l'élément opérationnel (9), s'étant déplacé en direction du côté d'extrémité antérieure, est monté, étant formée dans la surface circonférentielle extérieure de la barre à came (24) pour se connecter à la surface de la came (25a).

6. Dispositif de remplacement d'élément selon une quelconque des revendications 1 à 5, dans lequel,
l'élément de sollicitation (10) étant un ressort (10),
un récepteur de ressort annulaire (11), recevant un bout du ressort (10), étant agencé sur une surface circonférentielle extérieure d'une partie côté de base de la tige de sortie (5) de façon à se déplacer vers le côté d'extrémité de base conjointement avec la tige de sortie (5),
le récepteur de ressort (11) possédant une partie réceptrice (13) qui reçoit un bout du ressort (10), et une partie de paroi cylindrique (14) coulissant contre l'orifice cylindrique (6), et
la longueur de la partie de paroi cylindrique (14) étant supérieure à la largeur dans le sens radial de la partie réceptrice (13).

7. Dispositif de remplacement d'élément selon une quelconque des revendications 1 à 6, dans lequel,
dans la barre à came (24), une cannelure d'échappement de la tige (27), dans laquelle se place la partie d'extrémité de base de la tige de sortie (5), est agencée pour chevaucher la rainure de came (25).

8. Dispositif de remplacement d'élément selon une quelconque des revendications 1 à 7,
l'élément opérationnel (9) étant une sphère.
